(19) Europäisches Patentamt / European Patent Office / Office européen des brevets

(11) **EP 3 966 739 B1**

(12) **FASCICULE DE BREVET EUROPEEN**

(45) Date de publication et mention de la délivrance du brevet:
**28.02.2024 Bulletin 2024/09**

(21) Numéro de dépôt: **20724116.7**

(22) Date de dépôt: **07.05.2020**

(51) Classification Internationale des Brevets (IPC):
**G06F 18/213** (2023.01)  **G06F 18/2135** (2023.01)
**G06F 18/2431** (2023.01)  **G06V 10/82** (2022.01)

(52) Classification Coopérative des Brevets (CPC):
**G06V 10/82; G06F 18/213; G06F 18/2135; G06F 18/2431**

(86) Numéro de dépôt international:
**PCT/EP2020/062762**

(87) Numéro de publication internationale:
**WO 2020/229310 (19.11.2020 Gazette 2020/47)**

(54) **PROCÉDÉ D'ANALYSE AUTOMATIQUE D'IMAGES POUR RECONNAÎTRE AUTOMATIQUEMENT AU MOINS UNE CARACTÉRISTIQUE RARE**

AUTOMATISCHES BILDANALYSEVERFAHREN ZUR AUTOMATISCHEN ERKENNUNG VON MINDESTENS EINER SELTENEN EIGENSCHAFT

AUTOMATIC IMAGE ANALYSIS METHOD FOR AUTOMATICALLY RECOGNISING AT LEAST ONE RARE CHARACTERISTIC

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.05.2019 FR 1904877**

(43) Date de publication de la demande:
**16.03.2022 Bulletin 2022/11**

(73) Titulaires:
• **Université Brest Bretagne Occidentale**
**29238 Brest Cedex 3 (FR)**
• **Inserm**
**75654 Paris Cedex 13 (FR)**

(72) Inventeur: **QUELLEC, Gwenolé**
**29200 BREST (FR)**

(74) Mandataire: **Plasseraud IP**
**66, rue de la Chaussée d'Antin**
**75440 Paris Cedex 09 (FR)**

(56) Documents cités:
• PERRONNIN FLORENT ET AL: "Fisher vectors meet Neural Networks: A hybrid classification architecture", 2015 IEEE CONFERENCE ON COMPUTER VISION AND PATTERN RECOGNITION (CVPR), IEEE, 7 juin 2015 (2015-06-07), pages 3743-3752, XP032793825, DOI: 10.1109/CVPR.2015.7298998
• QUELLEC GWENOLÉ ET AL: "Deep image mining for diabetic retinopathy screening", MEDICAL IMAGE ANALYSIS, OXFORD UNIVERSITY PRESS, OXOFRD, GB, 28 avril 2017 (2017-04-28), XP085107044, ISSN: 1361-8415, DOI: 10.1016/J.MEDIA.2017.04.012
• YANDONG GUO ET AL: "One-shot Face Recognition by Promoting Underrepresented Classes", ARXIV.ORG, CORNELL UNIVERSITY LIBRARY, 201 OLIN LIBRARY CORNELL UNIVERSITY ITHACA, NY 14853, 18 juillet 2017 (2017-07-18), XP081309417,

**Description**

Le présent document concerne le domaine de la reconnaissance automatique de caractéristiques rares dans des images et un procédé d'analyse d'images. Le procédé d'analyse d'images trouve une application dans de nombreux domaines techniques, tels que la détection de maladies ou pathologies rares à partir d'images médicales ou la détection de présence d'événements rares à partir d'images de vidéosurveillance.

La présente description concerne plus particulièrement la reconnaissance de caractéristiques présentes dans un nombre d'images tellement faible (par exemple moins de 10 images) qu'un apprentissage supervisé, a fortiori un apprentissage profond, n'est pas possible.

Le procédé d'analyse d'images sera plus particulièrement décrit dans le cadre de la reconnaissance ou le dépistage automatique de pathologies oculaires rares à partir de photographies ou images de fond d'oeil sans qu'on puisse y voir une quelconque limitation cette application. Pour réaliser ce dépistage, il est connu d'utiliser des techniques d'apprentissage (apprentissage par transfert, apprentissage multitâche, apprentissage spontané) associées à des réseaux de neurones convolutifs. Les réseaux neuronaux sont alors entraînés à détecter les pathologies oculaires à partir de collections d'images de fond d'oeil.

Ces techniques permettent de détecter de nombreuses pathologies, notamment la rétinopathie diabétique, la dégénérescence maculaire liée à l'âge (DMLA) ou le glaucome, qui sont des pathologies fréquentes. Mais elles ne sont pas adaptées pour détecter les pathologies rares en raison du faible nombre d'images de fond d'oeil caractérisant ces pathologies.

D'une manière plus générale, les réseaux neuronaux tels qu'ils sont utilisés actuellement ne permettent pas de détecter des caractéristiques rares.

Le document intitulé Fisher vectors meet Neural Networks: A hybrid classification architecture de F. Perronnin et al. (IEEE CONFERENCE ON COMPUTER VISION AND PATTERN RECOGNITION (CVPR), IEEE, 2015-06-07, pages 3743-3752, DOI: 10.1109/CVPR.2015.7298998) résout le problème de la classification des images où une image est étiquetée avec une ou plusieurs étiquettes en fonction de son contenu.

Il est décrit ici un procédé d'analyse automatique d'images (dénommé de manière abrégée par « procédé d'analyse » ou « procédé d'analyse d'images ») permettant de reconnaître automatiquement une caractéristique rare dans une image et éventuellement d'identifier dans l'image analysée les pixels correspondant à cette caractéristique rare.

Le procédé d'analyse automatique d'images propose, pour reconnaître des caractéristiques rares, de s'appuyer sur des modèles entraînés pour reconnaître des caractéristiques fréquentes.

Plus précisément, est présenté un procédé d'analyse automatique d'images, le procédé comprenant une phase d'apprentissage et une phase d'analyse, ledit procédé comprenant :

- pendant ladite phase d'apprentissage,

    - une étape d'apprentissage profond supervisé d'au moins un réseau de neurones convolutifs à partir d'une collection d'images associées à des annotations pour générer au moins un réseau de neurones convolutifs entrainé, agencé en couches et formant un modèle d'apprentissage apte à reconnaître au moins une caractéristique fréquente dans une image à analyser ; ladite collection d'images comprenant des images présentant ladite au moins une caractéristique fréquente et des images présentant au moins une caractéristique rare ; une caractéristique fréquente correspondant à une caractéristique dont la fréquence dans la collection d'images considérée est supérieure ou égale à une fréquence seuil ; une caractéristique rare correspondant à une caractéristique dont la fréquence dans la collection d'images considérée est inférieure à la fréquence seuil ; une annotation indiquant si l'au moins une caractéristique, rare ou fréquente, est présente ou absente dans chaque image de la collection d'images;
    - une étape de construction d'un espace de paramètres de dimension n, avec n≥2, chaque paramètre étant issu d'au moins une couche intermédiaire dudit au moins un réseau de neurones convolutifs entrainé et chaque paramètre représentant une dimension dudit espace de paramètres,
    - une étape de détermination d'une fonction de probabilité de présence dans ledit espace de paramètres pour au moins une dite caractéristique rare à partir d'une projection, dans ledit espace de paramètres, desdites images de la collection d'images présentant des annotations relatives à ladite au moins une dite caractéristique rare;

- pendant ladite phase d'analyse,

    - pour une image à analyser, une étape de reconnaissance de ladite au moins une dite caractéristique rare dans ladite image à analyser à partir de la fonction de probabilité de présence déterminée pour ladite au moins une dite caractéristique rare.

Selon des exemples de réalisation, le procédé comporte en outre une étape de détermination d'une fonction de probabilité de présence dans ledit espace de paramètres pour ladite au moins une dite caractéristique fréquente à partir d'une projection, dans ledit espace de paramètres, desdites images de la collection d'images présentant des annotations relatives à ladite au moins une dite caractéristique fréquente.

Selon des exemples de réalisation, l'étape d'apprentissage profond supervisé dudit au moins un réseau de neurones convolutifs est est mis en œuvre une deuxième fois après l'étape de détermination de la fonction de probabilité de présence dans ledit espace de paramètres pour ladite au moins une dite caractéristique fréquente et est supervisée par cette fonction.

Selon des exemples de réalisation, le procédé comporte en outre, pendant la phase d'analyse, une étape de reconnaissance de ladite au moins une caractéristique fréquente dans ladite image à analyser à partir dudit modèle d'apprentissage ou de la fonction de probabilité de présence déterminée pour ladite au moins une caractéristique fréquente.

Selon des exemples de réalisation, le procédé comporte en outre, pendant la phase d'apprentissage, une étape de détermination d'une fonction de probabilité de présence dans ledit espace de paramètres pour ladite au moins une caractéristique fréquente et en ce que l'étape d'apprentissage profond supervisé dudit au moins un réseau de neurones convolutifs est supervisée par ladite fonction de probabilité de présence de ladite au moins une caractéristique fréquente.

Selon des exemples de réalisation, le procédé comporte en outre, pendant la phase d'apprentissage, une étape de prétraitement des images de la collection d'images pour améliorer l'apprentissage dudit au moins un réseau de neurones convolutifs.

Selon des exemples de réalisation, lors de l'étape d'apprentissage profond supervisé, une pluralité de réseaux de neurones convolutifs sont entraînés séparément ou conjointement, chacun desdits réseaux de neurones convolutifs étant entrainé pour reconnaître ladite au moins une caractéristique fréquente.

Selon des exemples de réalisation, les réseaux de neurones convolutifs sont entraînés simultanément, via une régression logistique, afin de maximiser leur complémentarité.

Selon des exemples de réalisation, lors l'étape de construction dudit espace de paramètres à partir de données issues d'au moins une couche intermédiaire dudit au moins un réseau de neurones convolutifs, ladite au moins une couche intermédiaire est sélectionnée parmi les avant-dernières couches dudit au moins un réseau de neurones convolutifs.

Selon des exemples de réalisation, le procédé comporte en outre une étape de détermination d'une fonction de probabilité d'absence dans ledit espace de paramètres pour ladite au moins une dite caractéristique rare à partir d'une projection, dans ledit espace de paramètres, desdites images de la collection d'images et des annotations relatives à ladite au moins une dite caractéristique rare, ladite au moins une couche intermédiaire étant sélectionnée en se basant sur la maximisation pour au moins une caractéristique rare considérée de la distance de Patrick-Fischer entre la fonction de probabilité de présence de ladite au moins une caractéristique rare considérée et de la fonction de probabilité d'absence de ladite au moins une caractéristique rare considérée.

Selon des exemples de réalisation, l'espace de paramètres est un espace de paramètres réduit et l'étape de construction de l'espace de paramètres réduit comporte une étape de réduction de dimension d'un espace de paramètres initial en sortie de ladite moins une couche intermédiaire dudit au moins un réseau de neurones convolutifs entrainé.

Selon des exemples de réalisation, la dimension de l'espace de paramètres après réduction est égale à 2 ou 3.

Selon des exemples de réalisation, l'étape de réduction de dimension de l'espace de paramètres est basée sur un algorithme d'analyse en composantes principales et/ou sur l'algorithme t-SNE.

Selon des exemples de réalisation, le procédé comporte en outre, pour au moins une caractéristique rare ou fréquente reconnue dans une image dite courante, une étape de détermination des pixels responsables de la reconnaissance de ladite caractéristique, rare ou fréquente, dans ladite image courante.

Selon des exemples de réalisation , la détermination des pixels responsables de la reconnaissance de ladite caractéristique, rare ou fréquente, dans ladite image courante, est obtenue par rétro-propagation du gradient à travers chacun des réseaux de neurones convolutifs impliqués dans la construction de l'espace de paramètres.

Selon des exemples de réalisation, l'étape de reconnaissance comprend

- une construction d'un deuxième espace de paramètres réduit par réduction de l'espace de paramètres en sortie de ladite moins une couche intermédiaire dudit au moins un réseau de neurones convolutifs entrainé ;
- une projection dans le deuxième espace de paramètres de l'image à analyser pour obtenir une image projetée ;
- une obtention d'images projetées de référence dans le deuxième espace de paramètres obtenue par projection d'images de référence de la collection d'images; et
- une estimation d'une probabilité que l'image à analyser contienne la caractéristique rare, ladite probabilité étant calculée par régression à partir de probabilités de présence de la caractéristique rare déterminées pour les images de référence dont les images projetées de référence sont les plus proches voisines de l'image projetée.

Selon des exemples de réalisation, le deuxième espace de paramètres réduit est construit au moyen d'une analyse en composante principale appliquée à l'espace de paramètres en sortie de ladite moins une couche intermédiaire et la projection d'une image dans le deuxième espace de paramètres réduit est obtenue par application dudit au moins un réseau de neurones convolutifs entrainé à l'image considérée pour obtenir une sortie puis application à cette sortie d'une fonction de projection issue de l'analyse en composante principale.

Selon des exemples de réalisation, la probabilité de présence d'une caractéristique rare dans une image de référence est obtenue par projection de l'image de référence dans l'espace de paramètres réduit construit pour la caractéristique rare de sorte à obtenir une image projetée de référence puis application à l'image projetée de référence de la fonction de probabilité de présence définie dans l'espace de paramètres réduit.

Selon des exemples de réalisation, un dispositif d'analyse configuré pour mettre en oeuvre les étapes du procédé d'analyse selon l'une quelconque des revendications précédentes.

D'autres caractéristiques et avantages apparaîtront plus clairement à la lecture de la description détaillée qui suit des différents modes de réalisation donnés à titre d'exemple nullement limitatif et illustré par les dessins annexés, dans lesquels :

[Fig. 1] représente un diagramme de flux du procédé d'analyse automatique d'images selon un premier mode de réalisation;

[Fig. 2a] représente une image originale à analyser avant pré-traitement ;

[Fig. 2b] représente ladite image originale à analyser après pré-traitement ;

[Fig. 3a] représente des fonctions de densité de probabilité de présence de 12 caractéristiques parmi 41 caractéristiques propres à des pathologies de l'oeil ou visibles dans l'aeil ;

[Fig. 3b] représente des fonctions de densité de probabilité de présence de 12 autres caractéristiques parmi les 41 caractéristiques propres à des pathologies de l'oeil ou visibles dans l'aeil ;

[Fig. 3c] représente des fonctions de densité de probabilité de présence de 12 autres caractéristiques parmi les 41 caractéristiques propres à des pathologies de l'oeil ou visibles dans l'aeil ;

[Fig. 3d] représente des fonctions de densité de probabilité de présence des 5 dernières caractéristiques parmi les 41 caractéristiques propres à des pathologies de l'oeil ou visibles dans l'oeil ;

[Fig. 4] représente des courbes illustrant la performance moyenne de détection de caractéristiques fréquentes ou rares du procédé d'analyse automatique d'images ;

[Fig. 5] représente des courbes illustrant la performance moyenne de détection de caractéristiques fréquentes ou rares du procédé d'analyse automatique d'images en fonction de la fréquence dans la collection d'images employée pour l'apprentissage.

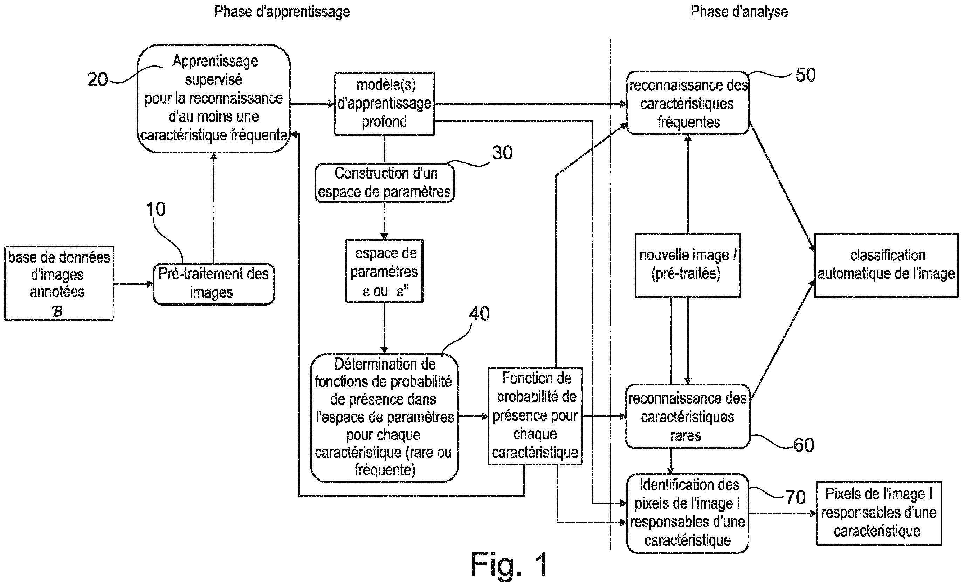

**La Figure 1** illustre un mode de réalisation du procédé d'analyse automatique d'images. Le procédé d'analyse automatique d'images vise à détecter (ou reconnaître) au moins une caractéristique rare dans une image à analyser. Il permet également de reconnaître au moins une caractéristique fréquente.

Le procédé d'analyse automatique d'images comprend une phase d'apprentissage pendant laquelle un réseau de neurones convolutif est entrainé à reconnaître une ou plusieurs caractéristiques fréquentes à partir d'une collection d'images annotées (ou marquées) et pendant laquelle des fonctions de probabilité de présence sont définies pour chaque caractéristique rare ou fréquente, et une phase d'analyse pendant laquelle une image est analysée pour déterminer, à partir du réseau de neurones entrainé et des fonctions de probabilité de présence, si elle comporte des caractéristiques rares ou fréquentes.

On désigne par collection d'images annotées une base de données d'images à chacune desquelles est associé au moins un label (ou étiquette, appelée ici également annotation) indiquant si une caractéristique donnée (rare ou fréquente) est présente ou non dans l'image.

Dans la suite de la description, B désigne une collection d'images dans laquelle la présence ou l'absence de N caractéristiques a été indiquée par un ou plusieurs experts pour chaque image $I \in B$. B est par exemple la collection d'images de fond d'oeil fournie par le réseau de télémédecine OPHDIAT pour le dépistage de la rétinopathie diabétique. Dans cette collection, le nombre N est égal à 41. Dans la suite de la description, on utilisera indifféremment les termes « base de données d'images » et « collection d'images ».

Soient $(Cn)n = 1...N$ ces caractéristiques et soit $y_{1,n} \in \{0,1\}$ le label de présence ($y_{1,n} = 1$) ou d'absence ($y_{1,n} = 0$) fourni par les experts pour l'image I de la collection et la caractéristique $c_n$. Soit $f_n$ la fréquence de la caractéristique $c_n$ dans la base de données B ($f_n = \sum_{I \in B} y_{I,n}$). Les caractéristiques sont triées par ordre décroissant de fréquence ($f_{n'} \leq f_n \forall n' \geq n$). Dans la suite de la description, une caractéristique fréquente désigne une caractéristique dont la fréquence dans la collection d'images considérée est supérieure ou égale à une fréquence seuil donnée et une caractéristique rare désigne une caractéristique dont la fréquence dans la collection d'images considérée est inférieure à ladite fréquence seuil. Comme mentionné plus loin, ce seuil peut être éventuellement modifié.

La base de données B est de préférence divisée en une base de données d'apprentissage $B_A$ utilisée pour l'apprentissage profond, une base de données de validation Bv et une base de données de test $B_T$ mutuellement exclusives ($B_A \cap B_v = B_A \cap B_T = B_V \cap B_T = \varnothing$ ; $B_A \cup B_V \cup B_T = B$).

En référence à la figure 1, le procédé d'analyse automatique d'images comporte avantageusement une première étape, référencée 10, de pré-traitement des images de la base de données B. Cette étape est propre au type d'images contenues dans la base de données B. Pour les images de fond d'oeil (telles que celles fournies par le réseau OPHDIAT), les images sont par exemple redimensionnées. Une région d'intérêt carrée est par exemple définie autour du champ de vision de la caméra, puis est ramenée à une taille de 299×299 pixels. Un changement d'espace de couleurs est avantageusement effectué ensuite. On passe par exemple de la représentation RGB à la représentation YCrCb. La composante Y, qui représente la luminance, est normalisée afin de gommer les différences d'illumination inter- et intra-image. Pour cela, le fond est estimé à l'aide d'un filtrage Gaussien de grande taille dans la composante Y puis le fond estimé est supprimé de cette composante. On repasse ensuite de la représentation YCrCb à la représentation RGB pour obtenir les images prétraitées.

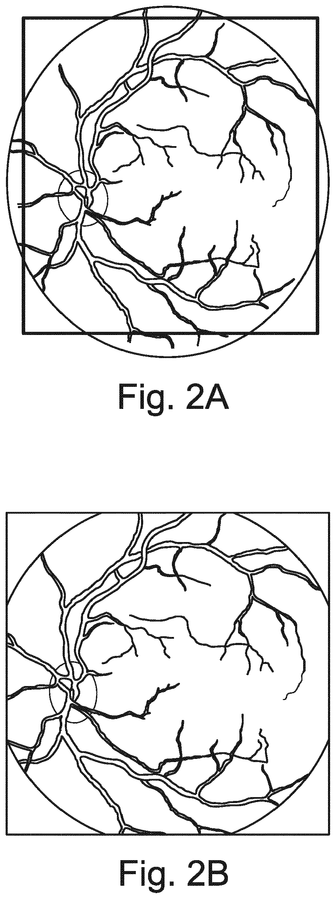

Cette étape de pré-traitement 10 est illustrée par les **figures 2A et 2B.** Ces figures représentent des images de fond d'oeil. La figure 2A représente une image originale et la figure 2B représente la même image après pré-traitement. La zone d'intérêt de l'image originale est délimitée par un carré blanc.

Ces images prétraitées sont ensuite traitées pour déterminer un modèle d'apprentissage profond destiné à reconnaître des caractéristiques fréquentes. Ce modèle est généré par une étape 20 d'apprentissage profond supervisé pour la reconnaissance d'au moins une caractéristique fréquente. Ce modèle est constitué d'un ou plusieurs réseaux de neurones convolutifs (ou CNNs en anglais pour Convolutional Neural Network). Dans cette étape, le ou les réseau(x) de neurones est (sont) entraîné(s) par les images prétraitées comportant les caractéristiques fréquentes. L'apprentissage est dit supervisé car il est réalisé à partir d'images annotées par un expert, l'annotation consistant à indiquer si l'image en question comporte ou non chacune des N caractéristiques (fréquentes ou rares).

Selon un mode de réalisation particulier, un réseau de neurones est entraîné séparément ou conjointement pour chaque caractéristique fréquente pendant l'étape 20.

Selon un mode de réalisation particulier, les différents réseaux de neurones sont avantageusement entraînés simultanément, via une régression logistique, pour maximiser leur complémentarité.

Les réseaux de neurones sont entraînés pour reconnaître les M caractéristiques les plus fréquentes parmi les N caractéristiques répertoriées dans la base de données B. Dans l'exemple de la base de données du réseau de télémédecine OPHDIAT, M est déterminé de sorte que la fréquence d'apparition $f_n$ des M caractéristiques $(c_n)_{n=1...M}$ les plus fréquentes est supérieure à 1000 ( $f_n \geq 1000\ \forall n \leq M$). Dans cet exemple, M est alors égal à 11 (M = 11).

Le modèle est par exemple défini comme un classifieur multi-label, entraîné à minimiser la fonction de coût $\mathcal{L}$ suivante :

[Math 1]

$$\begin{cases} \mathcal{L} &= -\sum_{n \leq M} \sum_{I \in \mathcal{B}_A} y_{I,n} \log \sigma(x_{I,n}) + (1 - y_{I,n}) \log\left(1 - \sigma(x_{I,n})\right) \\ \sigma(x) &= \dfrac{1}{1 + e^{-x}} \end{cases}$$

où

- $x_{I,n} \in \mathbb{R}$ est la sortie du modèle pour l'image I et la caractéristique $c_n$, n ≤ M, et

- l'image I est une image de la base d'apprentissage $B_A$.

La sortie $X_{I,n}$ est transformée par régression logistique en une probabilité $p_{I,n}^M$ via la fonction logistique d'activation $\sigma$: $p_{I,n}^M = \sigma(x_{I,n}) \epsilon [0,1]$ . Par souci de simplification, cette probabilité est notée $p_{I,n}$ dans la suite de la description. En variante, on peut employer la fonction d'activation « softmax » au lieu de la fonction $\sigma$. La fonction sigma $\sigma$ reste toutefois plus intéressante car elle permet la prise en compte d'images présentant conjointement plusieurs des N caractéristiques, contrairement à la fonction d'activation « softmax », qui considère qu'une image ne présente qu'une seule caractéristique.

Comme indiqué précédemment, le modèle d'apprentissage profond généré est un ensemble ou une concaténation de réseaux de neurones convolutifs (CNNs) entraînés. Chaque CNN est avantageusement sélectionné parmi les modèles connus suivants :

- Inception-v3 qui est décrit dans le document intitulé Rethinking the inception architecture for computer vision de C.Szegedy, V.Vanhoucke, S.Ioffe, J.Shlens, Z.Wojna (Proc IEEE CVPR. Las Vegas, NV, USA; 2016:2818-2826, doi: 10. 1 109/CVPR.2016.308);
- Inception-v4 qui est décrit dans le document intitulé Inception-v4, Inception-ResNet and the impact of residual connections on learning de C.Szegedy, S.Ioffe, V.Vanhoucke, A.Alemi (Proc AAAI. San Francisco, CA, USA; 2017:4278-4284);
- VGG-16 et VGG-19 qui sont décrits dans le document intitulé Very deep convolutional networks for large-scale image recognition de K. Simonyan, A.Zisserman (Proc ICLR. San Diego, CA, USA; 2015);
- ResNet-50, ResNet-101 et ResNet-152 qui sont décrits dans le document intitulé Deep residual learning for image recognition de K.He, X.Zhang, S.Ren, J.Sun (Proc CVPR. Las Vegas, NV, USA; 2016:770-778. doi:10.1109/CVPR.2016.90);
- NASNet-A qui est décrit dans le document intitulé Learning transférable architectures for scalable image recognition de B.Zoph, V.Vasudevan, J.Shlens, QV.Le (Proc IEEE CVPR. Salt Lake City, UT, USA; 2018).

Ces CNNs sont avantageusement pré-entraînés sur la base de données publique ImageNet (http://www.image-net.org/) puis affinés sur la base d'apprentissage $B_A$. Les CNNs ou couples de CNNs maximisant le score de classification sur la base de validation Bv sont utilisés comme modèles dans la suite du procédé. Le score de classification est par exemple défini comme l'aire sous une courbe ROC (pour Receiver-Operating Characteristic) bien connue de l'homme du métier dans le domaine de l'apprentissage automatique.

Selon un mode de réalisation particulier, les CNNs employés pour la base de données du réseau OPHDIAT sont des réseaux Inception-v3 et/ou Inception-v4 et/ou des couples de réseaux « Inception-v3 + Inception-v4 ».

L'étape 30 de construction d'un espace de paramètre va maintenant être décrite. De manière connue, chaque CNN est agencé en couches de traitement, chaque couche délivrant en sortie plusieurs paramètres. La première couche est appliquée à une image d'entrée et chaque couche suivante est appliquée aux valeurs des paramètres de sortie de la couche précédente. Etant donné qu'un ou plusieurs CNNs sont entraînés pour reconnaître l'ensemble des M caractéristiques les plus fréquentes, l'avant-dernière couche de ce CNN (ou ces CNNs) et les autres couches intermédiaires précédant l'avant-dernière couche délivrent des données haut niveau très générales et notamment des données de paramètres permettant de reconnaître ces M caractéristiques. Les paramètres délivrés par les sorties de cette avant-dernière couche sont employés pour définir un espace de paramètres, chaque paramètre de sortie constituant une dimension de l'espace de paramètres. L'espace de paramètres est construit à une étape 30 visible sur la figure 1.

En variante, l'espace de paramètres est défini à partir d'une couche intermédiaire du CNN (ou des CNNs) autre que l'avant dernière couche, par exemple l'antépénultième couche.

Avantageusement, la ou les couches intermédiaires employées pour définir l'espace des paramètres sont sélectionnées en se basant sur la maximisation de la distance de Patrick-Fischer entre la densité de probabilité de présence de chaque caractéristique, fréquente ou rare, et de la densité de probabilité d'absence de ladite caractéristique (ces fonctions de densité de probabilité sont définies plus loin dans la description). La maximisation peut être effectuée en considérant une caractéristique isolément ou en considérant plusieurs caractéristiques simultanément.

La distance de Patrick-Fisher est décrite en détail dans le document Nonparametric feature sélection de Patrick E, Fischer F, IEEE Trans Inform Theory, 1969;15(5):577-584. doi:10.1109/TIT.1969.1054354.

Le nombre de paramètres de sortie d'un CNN (= nombre de sorties de l'avant dernière couche du CNN) étant élevé, par exemple 2049 pour Inception-v3, 1537 pour inception-v4 et 3586 pour le couple Inception-v3 + Inception-v4, une réduction de dimension est avantageusement appliquée à l'espace de paramètres initial $\varepsilon$ en sortie de l'avant dernière couche du CNN par utilisation d'une projection sur un espace de paramètres réduit. Dans la suite de la description, P désigne le nombre de paramètres de l'espace de paramètres initial, cet espace initial étant noté $\varepsilon$ et $\gamma_1$ désigne la projection d'une image I de la base de données B dans l'espace de paramètres initial $\varepsilon$. Cette réduction de dimension est implémentée dans l'étape 30.

Selon un mode de réalisation particulier, la réduction de dimension est non supervisée mais pilotée par les images de la base de validation Bv et l'algorithme de réduction de dimension est l'algorithme t-SNE décrit dans le document intitulé Visualizing high-dimensional data using t-SNE de L.Van der Maaten, G.Hinton (Journal of Machine Learning Research 9 (2008) 2579-2605).

Dans ce mode de réalisation, la réduction se fait en deux étapes. Une première étape de réduction s'appuie sur une analyse en composantes principales (ACP) permettant de passer de l'espace $\varepsilon$ de dimension P à un premier espace réduit $\varepsilon'$ de dimension P' avec P'< P. P' est par exemple égal à 50. $\pi_I$ désigne la projection d'une image I dans l'espace $\varepsilon'$. Dans une deuxième étape de réduction, on applique l'algorithme t-SNE pour passer de l'espace $\varepsilon'$ à un

deuxième espace réduit ε" de dimension P" avec P"< P'. P" est par exemple égal à 2. $\tau_I$ désigne la projection d'une image I dans l'espace ε". Dans cet algorithme, la projection ε'→ ε" s'appuie sur une recherche de plus proches voisins dans l'espace ε'.

L'algorithme t-SNE a de très bonnes propriétés: bien que non supervisé, l'espace ε" qu'il génère permet de très bien séparer les différentes caractéristiques $(c_n)_{n=1...M}$.

Une fonction de densité de probabilité de présence $F_n$ est ensuite définie dans le deuxième espace réduit ε" pour chaque caractéristique $c_n$, $n \le N$ à l'étape 40. Cette fonction de densité de probabilité de présence est déterminée à partir des projections $\tau_I$ dans l'espace ε" de l'ensemble des images (images avec caractéristique rare et images avec caractéristique fréquente) de la base de validation Bv. Les étiquettes ou annotations $y_{1,n}$ sont utilisées comme facteur de pondération binaire pour ne prendre en compte que les images présentant la caractéristique $c_n$ considérée. Elle est par exemple définie comme suit, en se basant sur la méthode de Parzen-Rosenblatt avec un noyau Gaussien multivarié K:

[Math 2]

$$F_n(\tau) = \frac{1}{\sum_{I \in \mathcal{B}_V} y_{I,n}} \sum_{I \in \mathcal{B}_V} K\left(\frac{\tau - \tau_I}{h_n}\right)$$

La méthode de Parzen-Rosenblatt est décrite en détail dans le document : « On estimation of a probability density function and mode », Parzen E, Annals of Mathematical Statistics. 1962;33(3): 1065-1076. La fenêtre $h_n$, qui régit le degré de lissage de la fonction, est ajustée pour chaque fonction de densité $F_n$. Cette fenêtre est par exemple choisie de manière non supervisée, selon le critère de Scott :

[Math 3]

$$h_n = \left(\sum_{I \in \mathcal{B}_V} y_{I,n}\right)^{-\frac{1}{P''+4}}$$

Le critère de Scott est décrit en détail dans le document « Multivariate Density Estimation: Theory, Practice, and Visualization », de Scott DW., New York, Chicester: John Wiley & Sons; 1992.

De la même manière, une fonction de densité de probabilité d'absence $\overline{F_n}$ est définie pour chaque caractéristique $c_n$, $n \le N$ :

[Math 4]

$$\overline{F_n}(\tau) = \frac{1}{\sum_{I \in \mathcal{B}_V}(1 - y_{I,n})} \sum_{I \in \mathcal{B}_V} K\left(\frac{\tau - \tau_I}{\overline{h_n}}\right), \quad \overline{h_n} = \left(\sum_{I \in \mathcal{B}_V}(1 - y_{I,n})\right)^{-\frac{1}{P''+4}}$$

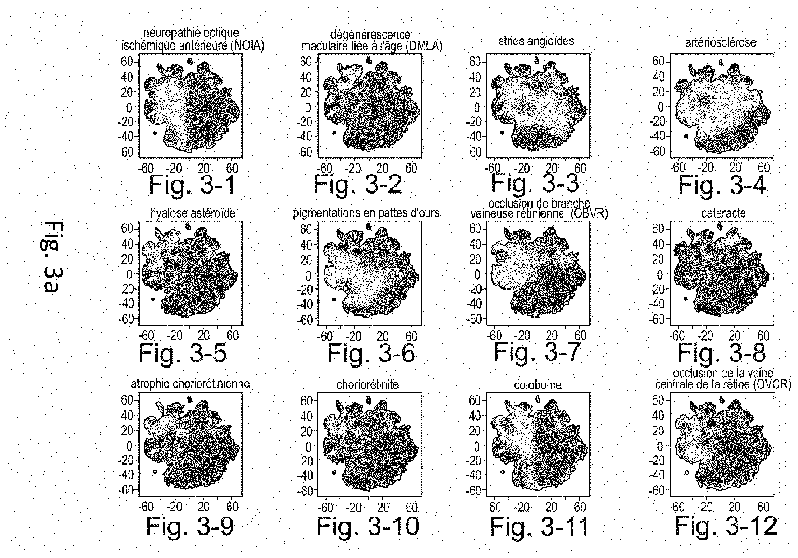

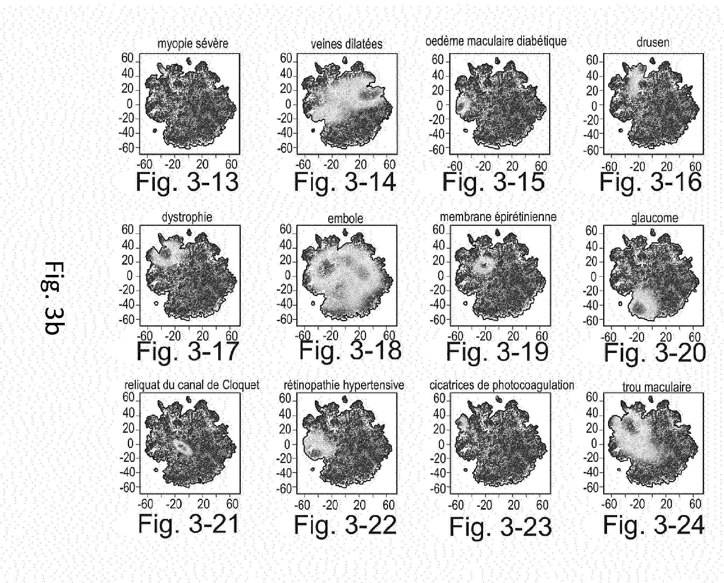

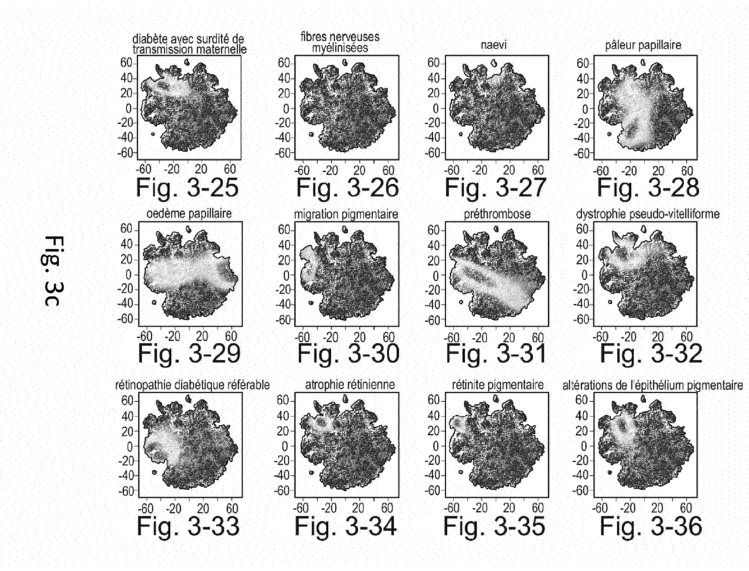

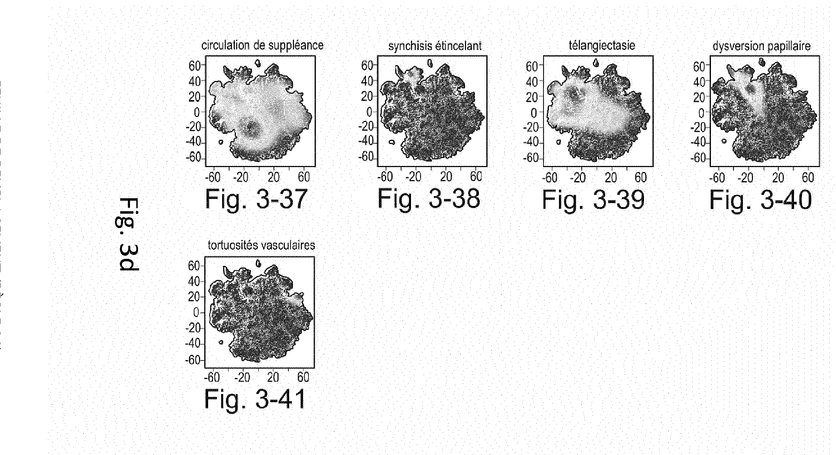

Les fonctions de densité de probabilité obtenues pour les N = 41 caractéristiques de la base de données du réseau de télémédecine OPHDIAT pour un CNN donné (Inception-v3) sont représentées graphiquement dans les figures 3-1 à 3-41 dans un espace réduit à P"=2 dimensions (X,Y). Sur ces figures, des fonctions de densité qui sont étendues spatialement (portions en rouge, jaune, vert et bleu clair) indiquent une mauvaise séparation des classes «présence» et «absence» de la caractéristique $c_n$, c'est-à-dire que la distance de Patrick-Fischer est faible (cette distance est définie plus loin par l'équation 6). Le choix de la ou des couches intermédiaires considérée(s) pour le calcul des fonctions de densité influe ainsi sur la capacité à séparer les images dans lesquelles une caractéristique est présente de celles dans lesquelles cette même caractéristique est absente.

La présence ou l'absence d'au moins l'une des caractéristiques $c_n$ dans une image d'apprentissage I est ensuite définie à partir des deux fonctions de densité de probabilité $F_n$ et $\overline{F_n}$ (équations (3) et (4)), en calculant la probabilité $q_{I,n}^M$ (notée ci-après $q_{I,n}$ par souci de simplification) suivante :

[Math 5]

$$q_{I,n} = \frac{F_n(\tau_I)}{F_n(\tau_I) + \overline{F_n}(\tau_I)}$$

Cette probabilité de présence est valable pour toutes les caractéristiques, rares ou fréquentes.

Il est à noter que la projection $\varepsilon' \to \varepsilon''$ réalisée par l'algorithme t-SNE présente deux limitations :

- cette projection n'est pas dérivable ; et
- cette projection n'est définie que pour les exemples disponibles au moment de sa construction (i.e. pour les exemples de la base de validation Bv), et ne permet pas la projection de nouveaux exemples dans cet espace.

Ces limitations ne s'appliquent toutefois pas à la projection de l'espace B (espace de définition des images de la base de données B) vers l'espace $\varepsilon$ (espace de sortie du CNNs) ou de l'espace $\varepsilon$ vers l'espace $\varepsilon'$ (projection réalisée par l'ACP).

Comme indiqué précédemment, l'algorithme t-SNE est non-supervisé. Afin d'améliorer la réduction de dimension, il est également possible d'optimiser de manière supervisée la projection $\varepsilon' \to \varepsilon''$. Pour cela, nous cherchons à maximiser la séparation entre les fonctions de densité $F_n$ et $\overline{F_n}$, pour chaque caractéristique $c_n$. Dans ce mode de réalisation avantageux, l'étape 40 est rebouclée sur l'étape 20 comme expliqué en détail ci-après.

Comme la projection $\varepsilon' \to \varepsilon''$ de l'algorithme t-SNE n'est pas dérivable, une première étape dite d'initialisation consiste alors à approximer la projection $\varepsilon' \to \varepsilon''$ par une fonction dérivable. La fonction dérivable choisie est par exemple un perceptron multicouche, c.-à-d. un réseau de neurones non convolutif. L'approximation se fait en minimisant l'erreur quadratique moyenne entre la sortie de t-SNE (la cible) et celle du perceptron multicouche (l'estimation). Une fois l'approximation terminée, une étape dite d'amélioration démarre. La fonction de coût de l'initialisation (étape 20) est remplacée par $\mathcal{L}'$, la somme des carrés des distances de Patrick-Fischer entre les fonctions de densité $F_n$ et $\overline{F_n}$, n = 1...N:

[Math 6]

$$\mathcal{L}' = -\sum_{n=1}^{N} \sum_{I \in \mathcal{B}_V} \left( F_n(\tau_I) - \overline{F_n}(\tau_I) \right)^2$$

Par souci d'efficacité, les termes $\tau_I$, $h_n$ et $\overline{h_n}$ des équations 2, 3 et 4 sont considérés comme constants lors de la minimisation de $\mathcal{L}'$ et sont réévalués à intervalles réguliers. La nouvelle projection $\varepsilon' \to \varepsilon''$ dispose alors d'une expression. La méthode des plus proches voisins n'est donc plus nécessaire dans ce cas.

L'approche ainsi proposée peut être étendue à l'optimisation de la projection $\varepsilon' \to \varepsilon''$. On se passe alors de l'analyse en composantes principales (ACP) dans la chaîne de réduction de dimension. Elle peut aussi être étendue à toute la chaîne de traitement (projection B $\to \varepsilon''$), la fonction de coût $\mathcal{L}'$ servant alors à optimiser les poids des CNNs. Cependant, plus on augmente les degrés de liberté, moins la solution est adaptée à des caractéristiques rares.

Dans les modes de réalisation décrits précédemment, les M caractéristiques considérées comme fréquentes sont définies par rapport un seuil, par exemple un seuil de fréquence qui est fixé à 1000 (la collection d'images comporte au moins 1000 images comportant cette caractéristique). Ce choix de fréquence, et par la même de valeur M, étant arbitraire, selon un mode de réalisation en variante, il est proposé de faire varier le nombre M de caractéristiques fréquentes, $M \leq N$. Par exemple, pour la base de données du réseau OPHDIAT, on fait varier M de 11 à 41 (= N).

Pour limiter le nombre de calculs, on peut faire varier M par pas de 6 : M prend alors les valeurs suivantes M $\in \{11, 17, 23, 29, 35, 41\}$. Pour chaque valeur de M et chaque caractéristique $c_n$, un score de classification $S_{q,n}^M$ est évalué sur la base de validation en s'appuyant sur les probabilités $q_{I,n}^M$ définies par l'équation (5). Pour les caractéristiques $c_n$ fréquentes, c.-à-d. telles que $n \leq M$, un deuxième score de classification $S_{p,n}^M$ est obtenu en s'appuyant sur les probabilités $p_{I,n}^M = \sigma(x_{I,n}) \in [0,1]$ du modèle d'apprentissage. Pour chaque caractéristique $c_n$, le modèle maxi-

misant $S_{r,n}^{M}$, est retenu.

A l'issue de cette phase d'apprentissage, on obtient ainsi un modèle d'apprentissage profond pour reconnaître les caractéristiques fréquentes dans toute nouvelle image à analyser et des fonctions de probabilité pour chaque caractéristique pour reconnaître les caractéristiques rares et éventuellement les caractéristiques fréquentes.

La phase d'analyse à suivre consiste à détecter la présence ou l'absence d'une caractéristique, rare ou fréquente, dans toute nouvelle image I à analyser.

Pendant cette phase d'analyse, la présence d'une caractéristique fréquente dans la nouvelle image I est détectée, à l'étape 60, par le modèle d'apprentissage profond issu de l'étape 20, correspondant au réseau de neurones entraîné. En alternative, la présence d'une caractéristique fréquente dans la nouvelle image I est détectée, à l'étape 60, par projection de l'image I dans l'espace de paramètres réduit $\varepsilon''$ construit à l'étape 30 pendant l'apprentissage et par application à l'image projetée de la fonction de probabilité de présence associée à cette caractéristique et définie à l'étape 40. La présence d'une caractéristique rare dans la nouvelle image I est détectée, à l'étape 50, par projection de l'image I dans l'espace de paramètres réduit $\varepsilon''$ défini pendant l'apprentissage et application à l'image projetée de la fonction de probabilité de présence associée à cette caractéristique. La nouvelle image I est avantageusement prétraitée (comme à l'étape 10) avant la mise en oeuvre des étapes 50 et 60.

Comme l'expression de la projection $\varepsilon' \to \varepsilon''$ de l'algorithme t-SNE n'est connue que pour les exemples employés pendant l'apprentissage (limitation mentionnée précédemment), la procédure suivante est proposée pour déterminer la probabilité qu'une nouvelle image I contienne la caractéristique $c_n$:

- l'image I est prétraitée (comme à l'étape 10) ;
- l'image prétraitée est ensuite présentée au CNN (ou aux CNNs) et les sorties $\gamma_I$ de l'avant-dernière couche sont calculées ;
- la projection $\varepsilon \to \varepsilon'$ issue de l'ACP est appliquée pour obtenir $\pi_I$ ;
- la méthode des k plus proches voisins (k est par exemple égal à 3) est alors utilisée pour estimer $q_{I,n}$ par régression ; cette recherche des k plus proches voisins se fait dans l'espace réduit $\varepsilon'$; la base de données de référence est la base Bv avec l'ensemble des couples $(\langle \pi_J, q_{J,n} \rangle)_{J \in \mathcal{B}_V}$, chaque couple étant ainsi constitué d'une image de référence projetée dans l'espace $\varepsilon'$ et d'une valeur de probabilité $q_{J,n}$ associée, où les valeurs $q_{I,n}$ sont déterminées de manière exacte par l'équation (5),
- si $n \le M$, la probabilité $p_{I,n}$ peut également être estimée ; on dispose donc, pour les caractéristiques fréquentes, de deux probabilités : $p_{I,n}$ et $q_{I,n}$.

On peut alors obtenir, pour l'image I, un score de classification représentatif d'une probabilité pour chacune des caractéristiques rares ou fréquentes. Plus ce score est élevé, plus la probabilité que l'image I comporte la caractéristique est importante.

Avantageusement, le procédé d'analyse automatique d'images est complété par une étape de détermination des pixels responsables de la reconnaissance de la caractéristique $c_n$, rare ou fréquente, dans l'image analysée. Cela permet de visualiser ou de cartographier les pixels de l'image responsables de la caractéristique $c_n$. Cette étape est référencée 70 dans la figure 1.

Cette étape est réalisée par rétro-propagation du gradient calculé à travers chacun des réseaux de neurones convolutifs et éventuelles projections impliqués dans la construction de l'espace de paramètres.

Pour cette étape, on utilise les fonctions de probabilité de présence de chaque caractéristique $c_n$ dans une image I définies précédemment : $p_{I,n}^{M}$ pour les caractéristiques fréquentes et/ou $q_{I,n}^{M}$ pour les caractéristiques rares ou fréquentes.

Dans le cas où la reconnaissance s'appuie sur $p_{I,n}^{M}$, la détermination des pixels responsables par rétro-propagation du gradient est décrite par exemple dans le document intitulé « Deep image mining for diabetic retinopathy screening » de G.Quellec, K.Charrière, Y.Boudi, B.Cochener, M.Lamard. Medical Image Anal. 2017;39:178-193, oi:10.1016/j.media.2017.04.012. Dans le cas où la reconnaissance s'appuie sur $q_{I,n}^{M}$, deux cas de figure se présentent pour déterminer l'importance d'un pixel $I_{xy}$ sur la classification d'une image I de taille $W \times H \times 3$. Dans la suite, la caractéristique $c_n$ est notée c pour alléger la notation.

Dans un premier cas de figure, toute la chaîne de traitement est dérivable, ce qui est le cas lorsque l'algorithme t-SNE est remplacé par une fonction dérivable telle qu'un perceptron multicouche.

Dans un deuxième cas de figure, une étape de la chaîne de traitement au moins est non dérivable (ce qui est le cas avec l'algorithme t-SNE).

Dans le premier cas de figure, l'importance $\xi_{xyc}$ de chaque pixel $I_{xy}$, pour la caractéristique c, est déterminée de la manière suivante :

[Math 7]

$$\xi_{xyc} = \frac{\partial G(m \circ I, c)}{\partial m_{xy}}$$

où G est un graphe de calcul dérivable représentant l'ensemble de la chaîne de traitement, m dénote une matrice de la taille W × H remplie de 1 et ∘ dénote le produit matriciel de Hadamard. Le critère $\xi_{xyc}$ fait ressortir les pixels de l'image qui expliquent la densité de probabilité pour la caractéristique c au point I. Cette solution est basée sur la rétropropagation du gradient calculé sur l'ensemble de la chaîne de traitement, c'est-à-dire entre l'espace de définition des images de la base de données et l'espace [0 ; 1] des probabilités de présence.

Dans le deuxième cas de figure, l'importance $\xi_{xy}$ de chaque pixel $I_{xy}$ est déterminée de la manière suivante :

[Math 8]

$$\zeta_{xy} = -\frac{1}{KP} \sum_{\lambda=1}^{\Lambda} \frac{\partial}{\partial m_{xy}} \left( \frac{\|\gamma_{m \circ I} - \gamma_{V_\lambda}\|}{\|\gamma_{m \circ I} - 1/D \sum_{d=1}^{D} \gamma_{W_d}\|} \right)$$

$$\times \operatorname{sgn}\left(\sum_{z=1}^{3} I_{xyz}\right) \left\|\gamma_I - 1/D \sum_{d=1}^{D} \gamma_{W_d}\right\|^2$$

où $(W_d)_{d=1...D}$ sont les D images de la base de données, $(V_\lambda)_{\lambda=1...\Lambda}$ sont les A ($\Lambda$=10) plus proches voisins de I dans l'espace de paramètres ε' (défini par l'ACP, pour une recherche rapide), ‖.‖ est la norme L2 et sgn(.) est la fonction « signe ». Le critère $\xi_{xy}$, qui permet de contourner la non-dérivabilité, fait ressortir les pixels de l'image qui la rapproche le plus de ses voisins que des autres images. Ce cas utilise également la rétropropagation du gradient calculé sur l'ensemble de la chaîne de traitement.

On peut ainsi afficher les pixels importants responsables de la détection de la caractéristique rare ou fréquente.

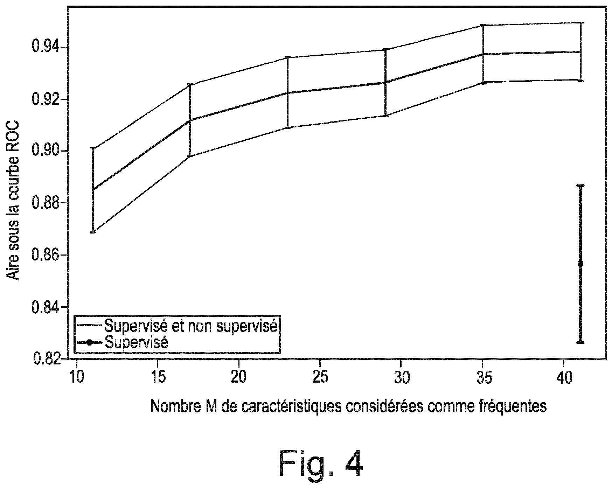

Les résultats obtenus sur la base de données du réseau OPHDIAT, en se basant sur $S_{p,n}^M$ ou sur $S_{r,n}^M$, r $\in$ {p, q}, sont présentés dans la **Figure 4**. Les résultats exploitant $S_{p,n}^M$, les scores issus de l'apprentissage supervisé, et $S_{q,n}^M$, ceux de l'apprentissage non supervisé, sont en vert. Ceux exploitant uniquement $S_{p,n}^M$ sont en rouge (apprentissage supervisé uniquement). Chaque courbe en couleur représente l'aire sous la courbe ROC (Receiver Operating Characteristic) en fonction du nombre M de caractéristiques considérées comme fréquentes. M varie de 11 à 41 par pas de 6 pour la courbe en vert. Ces deux courbes représentent la performance moyenne de détection des caractéristiques en fonction du nombre M de caractéristiques considérées comme fréquentes. Dans les deux cas, des CNNs sont entraînés pour chaque valeur de M' e {11, 17,...,M} et le meilleur CNN est choisi pour chaque caractéristique. Dans le cas « supervisé uniquement », la probabilité de présence ne peut être calculée que pour les caractéristiques fréquentes. Il faut donc attendre M = 41 pour qu'au moins un CNN soit disponible par caractéristique, d'où un unique point. Les barres d'erreur représentent l'écart-type.

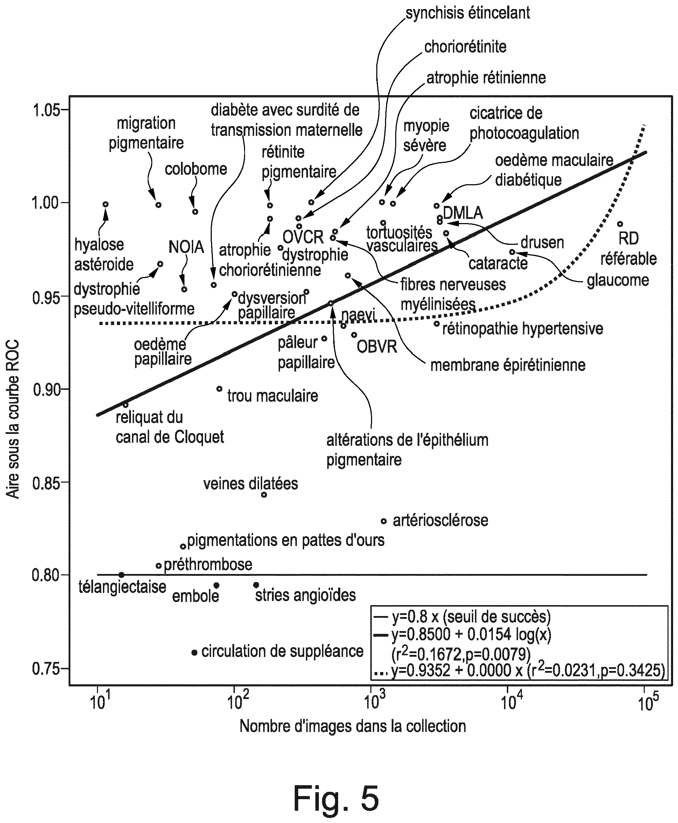

**La figure 5** illustre la performance du procédé d'analyse automatique d'images pour reconnaître une caractéristique rare ou fréquente (plus particulièrement les pathologies de la base de données du réseau OPHDIAT) en fonction de sa fréquence $f_n$. Une aire sous la courbe ROC inférieure à 0,8 est considérée comme un échec. Par cette figure, nous voyons que la corrélation entre l'aire sous la courbe ROC et la fréquence est très faible. Nous pouvons constater que des pathologies rares telles que l'hyalose astéroïde peuvent être aussi bien détectée que des pathologies plus fréquentes telles que la DMLA. Certaines pathologies rares telles que la télangiectasie restent difficiles à détecter.

Le procédé d'analyse automatique d'images peut être appliqué à la détection de tout type de caractéristiques ou d'événements rares à partir d'images.

En résumé, le procédé comprend une phase d'apprentissage et une phase d'analyse.

La phase d'apprentissage comprend :

- une étape d'apprentissage profond supervisé d'au moins un réseau de neurones convolutifs à partir d'une collection d'images prédéterminées pour générer un modèle d'apprentissage apte à reconnaître au moins une caractéristique fréquente dans une image à analyser ; ladite collection d'images prédéterminées comprenant des images présentant ladite au moins une caractéristique fréquente et des images présentant ladite au moins une caractéristique rare;
- une étape de construction d'un espace de paramètres de dimension n, avec n≥2, chaque paramètre étant issu d'au moins une couche intermédiaire dudit au moins un réseau de neurones convolutifs entrainé et chaque paramètre représentant une dimension dudit espace de paramètres,
- une étape de détermination d'une fonction de probabilité de présence dans ledit espace de paramètres pour ladite au moins une caractéristique rare à partir d'une projection, dans ledit espace de paramètres, desdites images de la collection d'images présentant ladite au moins une caractéristique rare.

La phase d'analyse comprend, pour une image à analyser, une étape de reconnaissance de ladite au moins une caractéristique rare dans ladite image à analyser à partir de la fonction de probabilité de présence déterminée pour ladite au moins une caractéristique rare.

Selon au moins un exemple de réalisation, le procédé comporte en outre, pendant la phase d'apprentissage, une étape de détermination d'une fonction de probabilité de présence dans ledit espace de paramètres pour ladite au moins une caractéristique fréquente et, pendant la phase d'analyse, une étape de reconnaissance de ladite au moins une caractéristique fréquente dans ladite image à analyser à partir dudit modèle d'apprentissage ou de la fonction de probabilité de présence déterminée pour ladite au moins une caractéristique fréquente.

Selon au moins un exemple de réalisation, le procédé comporte en outre, pendant la phase d'apprentissage, une étape de détermination d'une fonction de probabilité de présence dans ledit espace de paramètres pour ladite au moins une caractéristique fréquente et en ce que l'étape d'apprentissage profond supervisé dudit au moins un réseau de neurones convolutifs est supervisée par ladite fonction de probabilité de présence de ladite au moins une caractéristique fréquente.

Selon au moins un exemple de réalisation, le procédé comporte en outre, pendant la phase d'apprentissage, une étape de prétraitement des images de la collection d'images pour améliorer l'apprentissage dudit au moins un réseau de neurones convolutifs.

Selon au moins un exemple de réalisation, lors de l'étape d'apprentissage profond supervisé, une pluralité de réseaux de neurones convolutifs sont entraînés séparément ou conjointement, chacun des réseaux de neurones convolutifs étant entrainé pour reconnaître ladite au moins une caractéristique fréquente.

Selon au moins un exemple de réalisation, les réseaux de neurones convolutifs sont entraînés simultanément, via une régression logistique, afin de maximiser leur complémentarité.

Selon au moins un exemple de réalisation, lors l'étape de construction dudit espace de paramètres à partir de données issues d'au moins une couche intermédiaire dudit au moins un réseau de neurones convolutifs, ladite au moins une couche intermédiaire est sélectionnée parmi les avant-dernières couches dudit au moins un réseau de neurones convolutifs.

Selon au moins un exemple de réalisation, lesdites avant-dernières couches dudit au moins un réseau de neurones convolutifs sont sélectionnées en se basant sur la maximisation de la distance de Patrick-Fischer entre la densité de probabilité de présence de chaque caractéristique, fréquente ou rare, et de la densité de probabilité d'absence de ladite caractéristique.

Selon au moins un exemple de réalisation, l'étape de construction de l'espace de paramètres comporte une étape de réduction de dimension de l'espace de paramètres.

Selon au moins un exemple de réalisation, la dimension de l'espace de paramètres après réduction est égale à 2 ou 3.

Selon au moins un exemple de réalisation, l'étape de réduction de dimension de l'espace de paramètres est basée sur l'algorithme t-SNE.

Selon au moins un exemple de réalisation, le procédé comporte en outre, pour au moins une caractéristique rare ou fréquente reconnue dans une image dite courante, une étape de détermination des pixels responsables de la reconnaissance de ladite caractéristique, rare ou fréquente, dans ladite image courante.

Selon au moins un exemple de réalisation, la détermination des pixels responsables de la reconnaissance de ladite caractéristique, rare ou fréquente, dans ladite image courante, est obtenue par rétro-propagation du gradient à travers chacun des réseaux de neurones convolutifs impliqués dans la construction de l'espace de paramètres.

Selon des modes de réalisation, tout ou partie des étapes d'un procédé d'analyse décrit dans ce document sont mises en oeuvre par un logiciel ou programme d'ordinateur.

Les fonctions décrites dans ce document peuvent ainsi être mises en oeuvre par logiciel (par exemple, via un logiciel sur un ou plusieurs processeurs, pour exécution sur un ordinateur à usage général (par exemple, via l'exécution par un ou plusieurs processeurs) afin d'implémenter un ordinateur à usage spécifique ou similaire) et/ou puissent être mises en oeuvre dans du matériel (par exemple, en utilisant un ordinateur à usage général, un ou plusieurs circuits intégrés spécifiques (ASIC) et/ou tout autre équivalent matériel).

La présente description concerne ainsi un logiciel ou programme d'ordinateur, susceptible d'être exécuté par un dispositif d'analyse (par exemple, dispositif informatique ou ordinateur), au moyen d'un ou plusieurs processeurs de données, ce logiciel / programme comportant des instructions pour cause l'exécution par ce dispositif d'analyse de tout ou partie des étapes du procédé d'analyse décrits dans ce document. Ces instructions sont destinées à être stockées dans une mémoire d'un dispositif d'analyse, chargées puis exécutées par un ou plusieurs processeurs de ce dispositif d'analyse de sorte à causer l'exécution par ce dispositif d'analyse du procédé concerné.

Ce logiciel / programme peut être codé au moyen de n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif d'analyse peut être mis en oeuvre par une ou plusieurs machines physiquement distinctes. Le dispositif d'analyse peut présenter globalement l'architecture d'un ordinateur, incluant des constituants d'une telle architecture: mémoire(s) de données, processeur(s), bus de communication, interface(s) matérielle(s) pour la connexion de ce dispositif d' analyse à un réseau ou un autre équipement, interface(s) utilisateur, etc.

Dans un mode de réalisation, tout ou partie des étapes du procédé décrit dans ce document sont mises en oeuvre par un dispositif d'analyse doté de moyens de mise en oeuvre de ces étapes du procédé d'analyse.

Ces moyens peuvent comprendre des moyens logiciels (software) (par ex. des instructions d'un ou plusieurs composants d'un programme) et/ou moyens matériels (hardware) (par ex. mémoire(s) de données, processeur(s), bus de communication, interface(s) matérielle(s), etc).

Des moyens mettant en oeuvre une fonction ou un ensemble de fonctions peuvent également correspondre dans ce document à un composant logiciel, à un composant matériel ou bien à un ensemble de composants matériels et/ou logiciels, apte à mettre en oeuvre la fonction ou l'ensemble de fonctions, selon ce qui est décrit ci-dessous pour les moyens concernés.

La présente description concerne aussi un support d'informations lisible par un processeur de données, et comportant des instructions d'un programme tel que mentionné ci-dessus.

Le support d'informations peut être n'importe quel moyen matériel, entité ou dispositif, capable de stocker les instructions d'un programme tel que mentionné ci-dessus. Les supports de stockage de programme utilisables incluent les mémoires ROM ou RAM, les supports de stockage magnétiques tels que des disques magnétiques et des bandes magnétiques, les disques durs ou des supports de stockage de données numériques à lecture optique, etc, ou toute combinaison de ces supports.

Dans certains cas, le support de stockage lisible par ordinateur n'est pas transitoire. Dans d'autres cas, le support d'informations peut être un support transitoire (par exemple, une onde porteuse) pour la transmission d'un signal (signal électromagnétique, électrique, radio ou optique) porteur des instructions de programme. Ce signal peut être acheminé via un moyen de transmission approprié, filaire ou non filaire: câble électrique ou optique, liaison radio ou infrarouge, ou par d'autres moyens.

Un mode de réalisation concerne également un produit programme d'ordinateur comprenant un support de stockage lisible par ordinateur sur lequel sont stockées des instructions de programme, les instructions de programme étant configurées pour causer la mise en oeuvre par le dispositif d'analyse de tout ou partie des étapes d'un procédé d'analyse décrit ici lorsque les instructions de programme sont exécutées par un ou plusieurs processeurs et/ou un ou plusieurs composants matériels programmables.

**Revendications**

**1.** Procédé d'analyse automatique d'images, ledit procédé comprenant une phase d'apprentissage et une phase d'analyse, ledit procédé comprenant :

• pendant ladite phase d'apprentissage,

- une étape (20) d'apprentissage profond supervisé d'au moins un réseau de neurones convolutifs à partir d'une collection d'images associées à des annotations pour générer au moins un réseau de neurones convolutifs entrainé, agencé en couches et formant un modèle d'apprentissage apte à reconnaître au moins une caractéristique fréquente dans une image à analyser ; ladite collection d'images comprenant des images présentant ladite au moins une caractéristique fréquente et des images présentant au moins une caractéristique rare ; une caractéristique fréquente correspondant à une caractéristique dont la fréquence dans la collection d'images considérée est supérieure ou égale à une fréquence seuil ; une caractéristique rare correspondant à une caractéristique dont la fréquence dans la collection d'images considérée est inférieure à la fréquence seuil ; une annotation indiquant si l'au moins une caractéristique, rare ou fréquente, est présente ou absente dans chaque image de la collection d'images;
- une étape (30) de construction d'un espace de paramètres de dimension n, avec n≥2, chaque paramètre étant issu d'au moins une couche intermédiaire dudit au moins un réseau de neurones convolutifs entrainé et chaque paramètre représentant une dimension dudit espace de paramètres,
- une étape (40) de détermination d'une fonction de probabilité de présence dans ledit espace de paramètres pour au moins une dite caractéristique rare à partir d'une projection, dans ledit espace de paramètres, desdites images de la collection d'images présentant des annotations relatives à ladite au moins une dite caractéristique rare;

• pendant ladite phase d'analyse,

- pour une image à analyser, une étape (60) de reconnaissance de ladite au moins une dite caractéristique rare dans ladite image à analyser à partir de la fonction de probabilité de présence déterminée pour ladite au moins une dite caractéristique rare.

2. Procédé d'analyse selon la revendication 1, comprenant en outre, pendant la phase d'apprentissage, une étape (40) de détermination d'une fonction de probabilité de présence dans ledit espace de paramètres pour ladite au moins une dite caractéristique fréquente à partir d'une projection, dans ledit espace de paramètres, desdites images de la collection d'images présentant des annotations relatives à ladite au moins une dite caractéristique fréquente.

3. Procédé d'analyse selon la revendication 2 dans lequel l'étape d'apprentissage profond supervisé dudit au moins un réseau de neurones convolutifs est mis en oeuvre une deuxième fois après l'étape de détermination de la fonction de probabilité de présence dans ledit espace de paramètres pour ladite au moins une dite caractéristique fréquente et est supervisée par cette fonction.

4. Procédé d'analyse selon l'une quelconque des revendications précédentes, dans lequel, lors de l'étape (20) d'apprentissage profond supervisé, une pluralité de réseaux de neurones convolutifs sont entraînés séparément ou conjointement, chacun desdits réseaux de neurones convolutifs étant entrainé pour reconnaître ladite au moins une caractéristique fréquente.

5. Procédé d'analyse selon l'une quelconque des revendications précédentes, dans lequel, ledit espace de paramètres est construit à partir de valeurs de paramètres de sortie issues d'au moins une couche intermédiaire dudit au moins un réseau de neurones convolutifs, ladite au moins une couche intermédiaire étant sélectionnée parmi les avant-dernières couches dudit au moins un réseau de neurones convolutifs.

6. Procédé d'analyse selon la revendication précédente, comprenant une étape de détermination d'une fonction de probabilité d'absence dans ledit espace de paramètres pour ladite au moins une dite caractéristique rare à partir d'une projection, dans ledit espace de paramètres, desdites images de la collection d'images et des annotations relatives à ladite au moins une dite caractéristique rare,
ladite au moins une couche intermédiaire étant sélectionnée en se basant sur la maximisation pour au moins une caractéristique rare considérée de la distance de Patrick-Fischer entre la fonction de probabilité de présence de ladite au moins une caractéristique rare considérée et de la fonction de probabilité d'absence de ladite au moins une caractéristique rare considérée .

7. Procédé d'analyse selon l'une quelconque des revendications précédentes, dans lequel l'espace de paramètres est un espace de paramètres réduit et l'étape de construction de l'espace de paramètres réduit comporte une étape de réduction de dimension d'un espace de paramètres initial en sortie de ladite moins une couche intermédiaire dudit au moins un réseau de neurones convolutifs entrainé.

8. Procédé d'analyse selon la revendication 7, dans lequel ladite étape de réduction de dimension de l'espace de paramètres initial est basée sur un algorithme d'analyse en composantes principales et/ou sur un algorithme t-SNE.

9. Procédé d'analyse selon l'une quelconque des revendications précédentes, comprenant en outre, pour au moins une caractéristique rare, une étape de détermination dans l'image à analyser des pixels responsables de la reconnaissance de ladite caractéristique rare considérée.

**10.** Procédé d'analyse selon l'une quelconque des revendications précédentes lorsqu'elle dépend de la revendication 7, l'étape de reconnaissance comprenant

- une construction d'un deuxième espace de paramètres réduit par réduction de l'espace de paramètres en sortie de ladite moins une couche intermédiaire dudit au moins un réseau de neurones convolutifs entrainé ;
- une projection dans le deuxième espace de paramètres de l'image à analyser pour obtenir une image projetée ;
- une obtention d'images projetées de référence dans le deuxième espace de paramètres obtenue par projection d'images de référence de la collection d'images; et
- une estimation d'une probabilité que l'image à analyser contienne la caractéristique rare, ladite probabilité étant calculée par régression à partir de probabilités de présence de la caractéristique rare déterminées pour les images de référence dont les images projetées de référence sont les plus proches voisines de l'image projetée.

**11.** Procédé d'analyse selon la revendication 10, dans lequel le deuxième espace de paramètres réduit est construit au moyen d'une analyse en composante principale appliquée à l'espace de paramètres en sortie de ladite moins une couche intermédiaire et dans lequel la projection d'une image dans le deuxième espace de paramètres réduit est obtenue par application dudit au moins un réseau de neurones convolutifs entrainé à l'image considérée pour obtenir une sortie puis application à cette sortie d'une fonction de projection issue de l'analyse en composante principale.

**12.** Procédé d'analyse selon la revendication 10 ou 11, dans lequel la probabilité de présence d'une caractéristique rare dans une image de référence est obtenue par projection de l'image de référence dans l'espace de paramètres réduit construit pour la caractéristique rare de sorte à obtenir une image projetée de référence puis application à l'image projetée de référence de la fonction de probabilité de présence définie dans l'espace de paramètres réduit.

**13.** Dispositif d'analyse configuré pour mettre en oeuvre les étapes du procédé d'analyse selon l'une quelconque des revendications précédentes. 1

**Patentansprüche**

**1.** Verfahren der automatischen Bildanalyse, wobei das Verfahren eine Lernphase und eine Analysephase umfasst, wobei das Verfahren Folgendes umfasst:

• während der Lernphase,

- einen überwachten Deep-Learning-Schritt (20) wenigstens eines faltenden neuronalen Netzes anhand einer Bildersammlung, die mit Annotationen verbunden sind, um wenigstens ein trainiertes faltendes neuronales Netz zu erzeugen, das in Schichten angeordnet ist und ein Lernmodell bildet, welches wenigstens ein häufiges Merkmal in einem zu analysierenden Bild erkennen kann; wobei die Bildersammlung Bilder mit dem wenigstens einen häufigen Merkmal und Bilder mit wenigstens einem seltenen Merkmal umfasst; wobei ein häufiges Merkmal einem Merkmal entspricht, dessen Häufigkeit in der betrachteten Bildersammlung größer oder gleich einer Schwellenhäufigkeit ist; wobei ein seltenes Merkmal einem Merkmal entspricht, dessen Häufigkeit in der betrachteten Bildersammlung kleiner als die Schwellenhäufigkeit ist; wobei eine Annotation anzeigt, ob das wenigstens eine seltene oder häufige Merkmal in jedem Bild der Bildersammlung vorhanden oder nicht vorhanden ist;
- einen Schritt (30) der Konstruktion eines n-dimensionalen Parameterraums mit $n \geq 2$, wobei jeder Parameter aus wenigstens einer Zwischenschicht des wenigstens einen trainierten faltenden neuronalen Netzes stammt und jeder Parameter eine Dimension des Parameterraums darstellt,
- einen Schritt (40) der Bestimmung einer Wahrscheinlichkeitsfunktion des Vorhandenseins in dem Parameterraum für wenigstens ein sogenanntes seltenes Merkmal anhand einer Projektion der Bilder der Bildersammlung, die Annotationen zu dem wenigstens einen sogenannten seltenen Merkmal aufweisen, in den Parameterraum;

• während der Analysephase,

- für ein zu analysierendes Bild einen Schritt (60) des Erkennens des wenigstens einen seltenen Merkmals in dem zu analysierenden Bild anhand der für das wenigstens eine seltene Merkmal bestimmten Wahrscheinlichkeitsfunktion des Vorhandenseins.

2. Analyseverfahren nach Anspruch 1, das während der Lernphase ferner einen Schritt (40) zum Bestimmen einer Wahrscheinlichkeitsfunktion für das Vorhandensein in dem Parameterraum des wenigstens einen sogenannten häufigen Merkmals aus einer Projektion der Bilder der Bildersammlung, die Annotationen zu dem wenigstens einen sogenannten häufigen Merkmal aufweisen, in den Parameterraum.

3. Analyseverfahren nach Anspruch 2, wobei der überwachte Deep-Learning-Schritt des wenigstens einen faltenden neuronalen Netzes ein zweites Mal nach dem Schritt der Bestimmung der Wahrscheinlichkeitsfunktion des Vorhandenseins in dem Parameterraum des wenigstens einen häufigen Merkmals durchgeführt wird und durch diese Funktion überwacht wird.

4. Analyseverfahren nach einem der vorhergehenden Ansprüche, wobei in dem überwachten Deep-Learning-Schritt (20) eine Vielzahl von faltenden neuronalen Netzen separat oder gemeinsam trainiert werden, wobei jedes der faltenden neuronalen Netze trainiert wird, um das wenigstens eine häufige Merkmal zu erkennen.

5. Analyseverfahren nach einem der vorhergehenden Ansprüche, wobei der Parameterraum aus Ausgabeparameterwerten konstruiert wird, die von wenigstens einer Zwischenschicht des wenigstens einen faltenden neuronalen Netzes stammen, wobei die wenigstens eine Zwischenschicht aus den vorletzten Schichten des wenigstens einen faltenden neuronalen Netzes gewählt wird.

6. Analyseverfahren nach dem vorhergehenden Anspruch, umfassend einen Schritt der Bestimmung einer Wahrscheinlichkeitsfunktion der Abwesenheit in dem Parameterraum des wenigstens einen seltenen Merkmals aus einer Projektion der Bilder der Bildersammlung und der Annotationen, die sich auf das wenigstens eine seltene Merkmal beziehen, in den Parameterraum,
wobei die wenigstens eine Zwischenschicht auf der Grundlage der Maximierung für wenigstens ein betrachtetes seltenes Merkmal der Patrick-Fischer-Distanz zwischen der Wahrscheinlichkeitsfunktion des Vorhandenseins des wenigstens einen betrachteten seltenen Merkmals und der Wahrscheinlichkeitsfunktion des Nichtvorhandenseins des wenigstens einen betrachteten seltenen Merkmals gewählt wird.

7. Analyseverfahren nach einem der vorhergehenden Ansprüche, wobei der Parameterraum ein reduzierter Parameterraum ist und der Schritt der Konstruktion des reduzierten Parameterraums einen Schritt der Dimensionsreduktion eines ursprünglichen Parameterraums am Ausgang der wenigstens einen Zwischenschicht des wenigstens einen trainierten faltenden neuronalen Netzes umfasst.

8. Analyseverfahren nach Anspruch 7, wobei der Schritt der Dimensionsreduktion des ursprünglichen Parameterraums auf einem Hauptkomponentenanalyse-Algorithmus und/oder einem t-SNE-Algorithmus basiert.

9. Analyseverfahren nach einem der vorhergehenden Ansprüche, das ferner für wenigstens ein seltenes Merkmal einen Schritt der Bestimmung der Pixel in dem zu analysierenden Bild umfasst, die für die Erkennung des betrachteten seltenen Merkmals verantwortlich sind.

10. Analyseverfahren nach einem der vorhergehenden Ansprüche, sofern von Anspruch 7 abhängig, wobei der Erkennungsschritt umfasst

- eine Konstruktion eines zweiten reduzierten Parameterraums durch Reduktion des Parameterraums am Ausgang der wenigstens einen Zwischenschicht des wenigstens einen faltenden neuronalen Netzes;
- eine Projektion des zu analysierenden Bildes in den zweiten Parameterraum, um ein projiziertes Bild zu erhalten,
- eine Gewinnung von projizierten Referenzbildern in dem zweiten Parameterraum, die durch Projektion von Referenzbildern aus der Bildersammlung erhalten werden; und
- eine Schätzung einer Wahrscheinlichkeit, mit der das zu analysierende Bild das seltene Merkmal enthält, wobei die Wahrscheinlichkeit durch Regression aus Wahrscheinlichkeiten für das Vorhandensein des seltenen Merkmals berechnet wird, die für die Referenzbilder bestimmt wurden, deren projizierte Referenzbilder die nächsten Nachbarn des projizierten Bildes sind.

11. Analyseverfahren nach Anspruch 10, wobei der zweite reduzierte Parameterraum mittels einer Hauptkomponentenanalyse konstruiert wird, die auf den Parameterraum am Ausgang der wenigstens einen Zwischenschicht angewendet wird, und wobei die Projektion eines Bildes in den zweiten reduzierten Parameterraum durch Anwendung des wenigstens einen trainierten faltenden neuronalen Netzes auf das betrachtete Bild erreicht wird, um eine Ausgabe und dann Anwendung einer Projektionsfunktion aus der Hauptkomponentenanalyse auf diese Ausgabe zu erhalten.

12. Analyseverfahren nach Anspruch 10 oder 11, wobei die Wahrscheinlichkeit des Vorhandenseins eines seltenen Merkmals in einem Referenzbild durch Projektion des Referenzbildes in den für das seltene Merkmal konstruierten reduzierten Parameterraum erhalten wird, um ein projiziertes Referenzbild zu erhalten, und dann Anwendung der in dem reduzierten Parameterraum definierten Funktion der Vorhandenseinswahrscheinlichkeit auf das projizierte Referenzbild.

13. Analysevorrichtung, die dazu ausgebildet ist, die Schritte des Analyseverfahrens nach einem der vorhergehenden Ansprüche auszuführen.

**Claims**

1. An automatic image analysis method, said method comprising a learning phase and an analysis phase, said method comprising:

   • during said learning phase,

      - a step (20) of supervised deep learning of at least one convolutional neural network based on a collection of images associated with annotations for generating at least one trained convolutional neural network, arranged in layers and forming a learning model able to recognise at least one frequent feature in an image to be analysed; said collection of images comprising images having said at least one frequent feature and images having at least one rare feature; a frequent feature corresponding to a feature whose frequency in the considered collection of images is greater than or equal to a threshold frequency; a rare feature corresponding to a feature whose frequency in the considered collection of images is less than the threshold frequency; an annotation indicating whether the at least one rare or frequent feature is present or absent in each image of the collection of images;
      - a step (30) of constructing an n-dimension parameter space, with $n \geq 2$, each parameter originating from at least one intermediate layer of said at least one trained convolutional neural network and each parameter representing a dimension of said parameter space;
      - a step (40) of determining a presence probability function in said parameter space for at least one so-called rare feature based on a projection, in said parameter space, of said images of the collection of images having annotations relating to said at least one so-called rare feature;

   • during said analysis phase,

      - for an image to be analysed, a step (60) of recognising said at least one so-called rare feature in said image to be analysed based on the presence probability function determined for said at least one so-called rare feature.

2. The analysis method according to claim 1, further comprising, during the learning phase, a step (40) of determining a presence probability function in said parameter space for said at least one so-called frequent feature based on a projection, in said parameter space, of said images of the collection of images having annotations relating to said at least one so-called frequent feature.

3. The analysis method according to claim 2, wherein the supervised deep learning step of said at least one convolutional neural network is implemented a second time after the step of determining the presence probability function in said parameter space for said at least one so-called frequent feature and is supervised by this function.

4. The analysis method according to any one of the preceding claims, wherein, during the supervised deep learning step (20), a plurality of convolutional neural networks is trained separately or jointly, each of said convolutional neural networks being trained to recognise said at least one frequent feature.

5. The analysis method according to any one of the preceding claims, wherein said parameter space is constructed based on values of output parameters originating from at least one intermediate layer of said at least one convolutional neural network, said at least one intermediate layer being selected from among the second last layers of said at least one convolutional neural network.

6. The analysis method according to the preceding claim, comprising a step of determining an absence probability function in said parameter space for said at least one so-called rare feature based on a projection, in said parameter space, of said images of the collection of images and annotations relating to said at least one so-called rare feature, said at least one intermediate layer being selected based on the maximisation, for at least one considered rare feature, of the Patrick-Fischer distance between the presence probability function of said at least one considered rare feature and the absence probability function of said at least one considered rare feature.

7. The analysis method according to any one of the preceding claims, wherein the parameter space is a reduced parameter space and the step of constructing the reduced parameter space includes a step of reducing the dimension of an initial parameter space at the output of said at least one intermediate layer of said at least one trained convolutional neural network.

8. The analysis method according to claim 7, wherein said step of reducing the dimension of the initial parameter space is based on a principal component analysis algorithm and/or on a t-SNE algorithm.

9. The analysis method according to any one of the preceding claims, further comprising, for at least one rare feature, a step of determining, in the image to be analysed, pixels responsible for recognising said considered rare feature.

10. The analysis method according to any one of the preceding claims when it depends on claim 7, the recognition step comprising

   - constructing a second reduced parameter space by reducing the parameter space at the output of said at least one intermediate layer of said at least one trained convolutional neural network;
   - projecting, in the second parameter space, the image to be analysed to obtain a projected image;
   - obtaining reference projected images in the second parameter space obtained by projecting reference images of the collection of images; and
   - estimating a probability that the image to be analysed contains the rare feature, said probability being computed by regression based on presence probabilities of the rare feature determined for the reference images wherein the reference projected images are the closest neighbours of the projected image.

11. The analysis method according to claim 10, wherein the second reduced parameter space is constructed by means of a principal component analysis applied to the parameter space at the output of said at least one intermediate layer and wherein the projection of an image in the second reduced parameter space is obtained by applying said at least one trained convolutional network to the considered image to obtain an output, then applying to this output a projection function originating from the principal component analysis.

12. The analysis method according to claim 10 or 11, wherein the presence probability of a rare feature in a reference image is obtained by projecting the reference image in the reduced parameter space constructed for the rare feature so as to obtain a reference projected image, then applying to the reference projected image the presence probability function defined in the reduced parameter space.

13. An analysis device configured to implement the steps of the analysis method according to any one of the preceding claims.

Phase d'apprentissage

Phase d'analyse

20 — Apprentissage supervisé pour la reconnaissance d'au moins une caractéristique fréquente

modèle(s) d'apprentissage profond

50 — reconnaissance des caractéristiques fréquentes

30 — Construction d'un espace de paramètres

10 — base de données d'images annotées $\mathcal{B}$

Pré-traitement des images

espace de paramètres $\varepsilon$ ou $\varepsilon''$

nouvelle image $I$ (pré-traitée)

classification automatique de l'image

40 — Détermination de fonctions de probabilité de présence dans l'espace de paramètres pour chaque caractéristique (rare ou fréquente)

Fonction de probabilité de présence pour chaque caractéristique

reconnaissance des caractéristiques rares — 60

Identification des pixels de l'image $I$ responsables d'une caractéristique — 70

Pixels de l'image $I$ responsables d'une caractéristique

Fig. 1

Fig. 2A

Fig. 2B

Fig. 3a

Fig. 3b

Fig. 3c

Fig. 3d

Fig. 4

Fig. 5

# EP 3 966 739 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **F. PERRONNIN et al.** IEEE CONFERENCE ON COMPUTER VISION AND PATTERN RECOGNITION (CVPR). IEEE, 07 Juin 2015, 3743-3752
- **C.SZEGEDY ; V.VANHOUCKE ; S.IOFFE ; J.SHLENS ; Z.WOJNA.** *Proc IEEE CVPR.,* 2016, 2818-2826
- **C.SZEGEDY ; S.IOFFE ; V.VANHOUCKE ; A.ALEMI.** *Proc AAAI. San Francisco,* 2017, 4278-4284
- **K. SIMONYAN ; A.ZISSERMAN.** *Proc ICLR.,* 2015
- **K.HE ; X.ZHANG ; S.REN ; J.SUN.** *Proc CVPR. Las Vegas,* 2016, 770-778
- **B.ZOPH ; V.VASUDEVAN ; J.SHLENS ; QV.LE.** *Proc IEEE CVPR.,* 2018
- **PATRICK E ; FISCHER F.** *IEEE Trans Inform Theory,* 1969, vol. 15 (5), 577-584
- **L.VAN DER MAATEN ; G.HINTON.** *Journal of Machine Learning Research,* 2008, vol. 9, 2579-2605
- **PARZEN E.** On estimation of a probability density function and mode. *Annals of Mathematical Statistics.,* 1962, vol. 33 (3), 1065-1076
- **DE SCOTT DW.** Multivariate Density Estimation: Theory, Practice, and Visualization. John Wiley & Sons, 1992
- **DE G.QUELLEC ; K.CHARRIÈRE ; Y.BOUDI ; B.COCHENER ; M.LAMARD.** Deep image mining for diabetic retinopathy screening. *Medical Image Anal.,* 2017, vol. 39, 178-193